# EUROPEAN PATENT APPLICATION

(11) **EP 0 541 815 A1**
(43) Date of publication of application: **19.05.1993**
(21) Application number: 92908538.9
(22) Date of filing: 09.04.1992
(51) Int. Cl.: B29B 9/06

(54) **APPARATUS FOR MANUFACTURING PLASTIC PELLETS**

(30) Priority: 10.04.1991 JP 77497/91; 10.04.1991 JP 77498/91
(71) Applicant: Moriyama, Masao, Nishinomiya, Hyogo 663 (JP)
(72) Inventor: Moriyama, Masao, Nishinomiya, Hyogo 663 (JP)
(74) Representative: Marlow, Nicholas Simon
(86) International application number: JP9200446
(87) International publication number: WO9218311

(57) **Abstract**

An apparatus for manufacturing plastic pellets, which is used by connecting it to the forward end of a plastic material extruding machine. The construction of this invention includes: a nozzle plate (7), on the horizontal circular periphery of which a multiplicity of nozzles are arranged; a cutter (8) rotatable in proximity to the undersurface of the nozzle plate (7); blower devices (9, 10) for introducing air from the interior to the exterior of the rotary shaft of the cutter; a vertical type pellet cooling chamber (19) extending from the peripheral edge of the nozzle plate (7) downwardly; a pellet delivery pipe (23) connected to the bottom end of the cooling chamber; and a cooling means for injecting into the pellet cooling chamber (19) cold air or atomized cold water. On the inner surface of the pellet cooling chamber, there is provided a non-adhesive material layer or sheet.

## Description

### BACKGROUND OF THE INVENTION

### Field of the Invention

The present invention relates to an apparatus for producing plastic pellets. More particularly, the present invention relates to an apparatus for producing plastic pellets continuously by cutting string-like sticks extruded through nozzles by means of a cutter running at predetermined cycles.

### Background Art

The inventor has invented an apparatus for producing plastic pellets on the principle underlying the present invention. The apparatus has been patented as Japanese Patent No. 1,075,702 (Publication No. 56-12490) and has been put into practise.

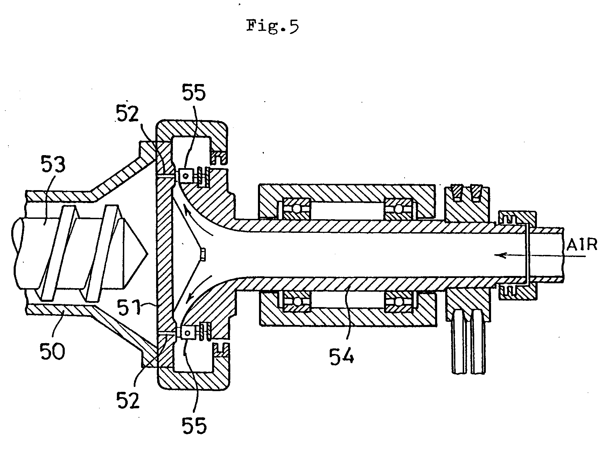

The known apparatus for producing plastic pellets will be described by reference to Figure 5:
The exemplary apparatus is provided with a horizontally supported cylinder 50 whose open end is closed by a disc 51 supported perpendicular to the axis of the cylinder 50. The cylinder 50 accommodates a screw rotor 53 which is reciprocally moved therein. The disc 51 is provided with nozzles 52 along the periphery thereof, wherein the nozzles 52 have openings within the inside space of the cylinder 50. A rotary pipe 54 is provided coaxially with the axis of the screw rotor 50. The rotary pipe 54 is provided with rotary cutters 55 (1 to 3 pieces) arranged along the periphery of the open end which is expanded like the flare of a bugle so as to produce a ring-shaped gap between the disc 51 and the rotary pipe 54. Air is supplied through the rotary pipe 54 from the root portion of the rotary pipe 54. Plastic is extruded through the nozzles 52 in the form of string-like sticks which are cut by the cutters 55 revolving in accordance with the rotation of the rotary pipe 54.

No problem arises when this type of apparatus is used in handling a highly viscous plastic material which readily hardens when it comes out of the cylinder 50 through the nozzles 52 and its temperature drops by exposure to air. However, when the plastic material is a type which tends to remain viscous persistently irrespective of exposure to air, there is a problem that the resulting pellets become masses.

The present invention aims at solving the problems pointed out above, and the primary object of the present invention is to provide an apparatus for producing plastic pellets that are applicable to any type of plastic materials.

### The Disclosure of the Invention

According to the present invention, there is provided an apparatus for producing plastic pellets, the apparatus including an extruder having a cylinder, a disc having nozzle apertures disposed in such a manner as to close an open end of the cylinder, the nozzle apertures being arranged along the periphery of the disc, a cutter carried on a holder supported on a rotary shaft, an air blower incorporated in the rotary shaft, the air blower blowing air in a direction in which the plastic material is extruded, the cutter being disposed at such a distance from the nozzle apertures so that the extruded plastic is cut into pellets, a cooling chamber having an upper section and a lower section, the upper section having an increasing cross-sectional area downward and the lower section having a decreasing cross-sectional area downward, and a pellet collector connected to the cooling chamber for collecting pellets.

The upper section of the cooling chamber is a frustum of a cone and the lower section thereof is a reversed frustum of a cone. Alternatively, the upper section and lower section are joined in an oval form, or in any other form.

The extruder can have a single screw rotor or double screw rotors maintained horizontal or alternatively, the two screw rotors can be maintained in a tilted position toward the same point.

The cooling chamber can include an inside wall coated with a fluorine-contained non-adhesive resin layer. In addition, the cooling chamber can have an inside wall provided with air path recesses covered with a non-adhesive layer, and a pump is provided in one of the recesses so as to supply positive and negative air pressure to the non-adhesive layer, so as to enable the layer to vibrate under the positive and negative air pressure.

A ring-shaped cooling water duct can be disposed along the joint between the upper section and the lower section, the cooling water duct having openings directed toward the interior of the cooling chamber.

In spite of the fact that the extruder is maintained horizontal, the extruded plastic material is caused to disperse parabolically downward by weight through the nozzle apertures in the disc fixed to the outlet of the extruder. The pellets are collected by the collector over a relative long distance through the vertical cooling chamber during which they are allowed to cool fully. Since the cooling chamber is a vertical type, the apparatus requires no large site for installation.

If the pellets tend to retain on the non-adhesive layer, they are easily shaken off because of the vibration of the layer under positive and negative air pressure.

The cooling air or water is blown against the pellets, and therefore they are caused to harden fully, and are smoothly transferred to the collector in dry condition.

### Brief Description of the Drawings

Figure 1 is a vertical cross-section through an apparatus for producing plastic pellets according to the present invention;
Figure 2 is a horizontal cross-section showing an outlet of the extruder used in the apparatus shown in Figure 1;
Figure 3 is a fragmentary view showing the rotary cutters and the structure surrounding them;
Figure 4 is a cross-sectional view showing the wall structure of a cooling chamber for the pellets; and
Figure 5 is a cross-sectional view showing a conventional apparatus for producing plastic pellets.

### Best Mode of Embodiment

The exemplary embodiment is provided with an extruder 1 having a cylinder 3 in which a pair of screw rotors 2A and 2B are rotated in different directions. The cylinder 3 is provided with an inlet 4 through which a material is supplied into the cylinder 3, and with an extruding outlet 5 connected to an intermediate duct 6 having a port, the duct 6 being bent virtually at 90 °. The port is round so as to be complementary to the cross-section of the cylinder 3.

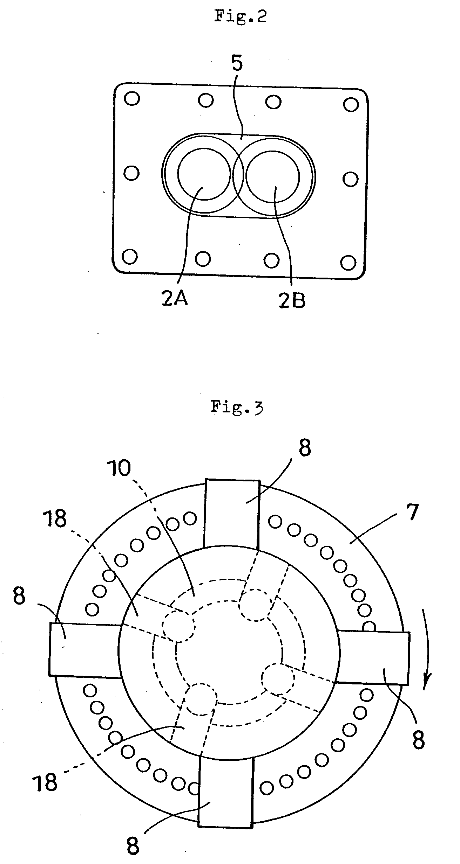

As shown in Figure 3, the port is provided with a disc 7 having apertures functioning as nozzles through which the material is extruded. Hereinafter, the apertures will be referred to as "nozzle apertures". The nozzle apertures are arranged in a circle along the periphery of the disc 7. It is also possible to arrange the apertures in double or triple concentric circles.

Rotary cutters 8 are provided below the nozzle apertures such that the rotary cutters 8 are rotated along the fixed disc 7 with air paths 18 maintained therebetween.

More specifically, a hollow rotary shaft 10 perpendicular to the disc 7 is provided, the shaft 10 having an air path 9 inside through which air is blown in a direction in which the plastic material is extruded so as to cool the extruded material and disperse the pellets. The rotary shaft 10 is supported by a cylinder 11 through ball bearings 12. The cylinder 11 is fixed to the extruder 1. The drive is imparted to the cylinder 11 by a pulley 13 driven by an electric motor 14. The top end of the cylinder 11 is connected to a blower 15 such that the air path 9 allows air from the blower 15 to pass and discharge through the air paths 18. The rotary cutters 8 are supported by a supporter 16 detachably fixed to the cylinder 10 by a bolt and nut 17. The number of the rotary cutters 8 is optional; in the exemplary embodiment, four cutters 8 are used.

A pellet cooling chamber 19 includes an upper frustum of a cone (herinafter referred to as "frustum") section 20 and a lower frustum (reversed frustum) section 21 joined together. A ring-shaped cooling air duct 22 is provided along the joint between the upper frustum section 20 and the lower reversed frustum section 21. The cooling duct 2 has air ports through which a cooling air is supplied into the cooling chamber 19 as indicated by the arrows. The lower reversed frustum section 21 is connected to a collector 23. Preferably, a water supply source 24 is disposed so as to force the pellets through the collector 23 under the water flow. The inside wall of the cooling chamber 19 is coated with fluorine-contained resin or any other non-adhesive film.

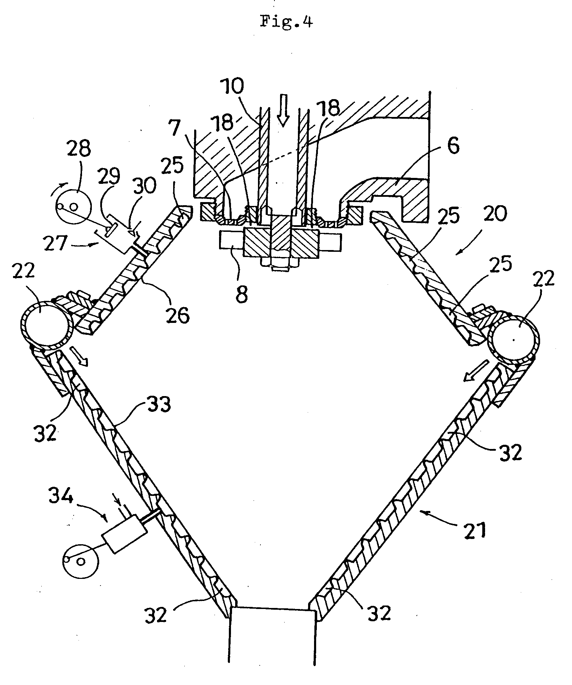

Figure 4 shows the internal structure of the cooling chamber 19. The inside wall of the upper frustum 20 is provided with recesses 25 over the whole surface thereof. The recesses 25 are covered with a non-adhesive film 26 of fluorine-contained resin wherein the recesses 25 are connected to one another, one of which is provided with a pump 27 having a motor 28 and a piston 29 driven by the motor 28. The piston 29 is reciprocally moved by the motor 28 to suck air through an inlet valve 30 and blow it against the film 26. In this way, the film 26 vibrates under the negative (sucking) and positive (blowing) of air, thereby causing soft pellets sticking to the film 26 to drop off in the cooling chamber 19. Instead of the non-adhesive film 26, cloth or an elastic sheet covered with a non-adhesive film can be used.

The ring-shaped cooling air duct 22 is fixed by means of bolts 31 along the joint between the upper frustum section 20 and the lower reversed frustum section 21. A cooling air is introduced into the cooling chamber 19 through the ports produced in the cooling duct 22. The lower reversed frustum section 21 is also provided with recesses 32 covered with a non-adhesive film 33. Likewise, a pump 34 is provided in one of the recesses 32, the pump 34 having the same structure as that of the pump 27.

As an alternative embodiment, a water supply duct can be provided instead of the cooling air duct 22 so as to supply an atomized water or water droplets into the cooling chamber 19.

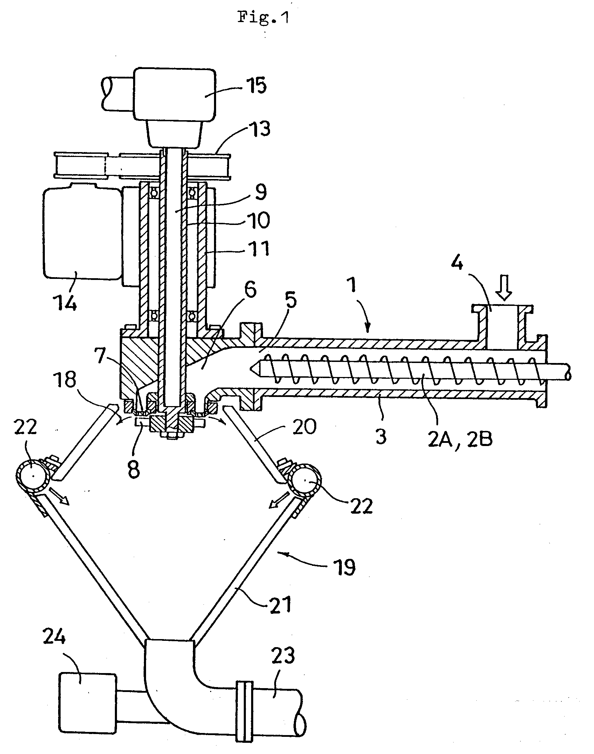

The configuration of the cooling chamber 19 is not limited to the frustum and reversed frustum shape shown in Figures 1 and 4. What is essential is that the cross-sectional area of the upper section is progressively increased downward, and that of the lower section is progressively decreased downward whether these sections are a conical or rectangular frustum or any other form of frustum.

### Industrial Applicability

The pellets are caused to drop radially or parabolically from the nozzles and are cooled in the cooling chamber over a relatively long period of time. Therefore, the pellets are prevented from adhering to each other into masses. The inside wall of the cooling chamber is covered with a non-adhering film that is caused to vibrate. Therefore, the soft pellets are prevented from staying on the inside wall of the cooling chamber and becoming masses. Thus, discrete pellets can be obtained.

The cooling chamber is a vertical type, and unlike the conventional horizontal type, the apparatus of the present invention requires no large site for installation.

## Claims

1. An apparatus for producing plastic pellets, the apparatus comprising an extruder having a cylinder, a disc having nozzle apertures disposed in such a manner as to close an open end of the cylinder, the nozzle apertures being arranged along the periphery of the disc, a cutter carried on a holder supported on a rotary shaft, an air blower incorporated in the rotary shaft, the air blower blowing air in a direction in which the plastic material is extruded, the cutter being disposed at such a distance from the nozzle apertures so that the extruded plastic is cut into pellets, a cooling chamber having an upper section and a lower section, the upper section having an increasing cross-sectional area downward and the lower section having a decreasing cross-sectional area downward, and a pellet collector connected to the cooling chamber for collecting pellets.

2. An apparatus according to claim 1, wherein the extruder is horizontally maintained, and the terminating end thereof is open toward the disc through a bent duct.

3. An apparatus according to claim 1, wherein the upper section of the cooling chamber is a frustum of a cone and the lower section thereof is a reversed frustum of a cone.

4. An apparatus according to claim 1, wherein the upper section of the cooling chamber is a frustum of a polygon and the lower section thereof is a reversed frustum of a polygon.

5. An apparatus according to claim 1, further comprising a ring-shaped cooling air duct disposed along the joint between the upper section and the lower section, the cooling air duct having openings directed toward the interior of the cooling chamber.

6. An apparatus according to claim 1, further comprising a ring-shaped cooling water duct disposed along the joint between the upper section and the lower section, the cooling water duct having openings directed toward the interior of the cooling chamber.

7. An apparatus according to claim 1, wherein the cooling chamber comprises an inside wall coated with a fluorine-contained non-adhesive resin layer.

8. An apparatus according to claim 7, wherein the cooling chamber comprises an inside wall provided with air path recesses covered with a non-adhesive layer, and a pump is provided in one of the recesses so as to supply positive and negative air pressure to the non-adhesive layer.
